# EUROPEAN PATENT SPECIFICATION

(11) **EP 3 523 144 B1**
(45) Date of publication and mention of the grant of the patent: **24.08.2022**
(21) Application number: 17781191.6
(22) Date of filing: 21.09.2017
(51) Int. Cl.: B60C 23/04, B29D 30/00

(54) **DEVICE FOR SECURING AN ELECTRONIC UNIT TO A TYRE AND A TYRE COMPRISING AN ELECTRONIC UNIT**
VORRICHTUNG ZUR BEFESTIGUNG EINER ELEKTRONISCHEN EINHEIT AN EINEM REIFEN UND REIFEN MIT EINER ELEKTRONISCHEN EINHEIT
DISPOSITIF DE FIXATION D'UNE APPAREIL ÉLECTRONIQUE SUR UN PNEUMATIQUE ET PNEUMATIQUE COMPRENANT UN APPAREIL ÉLECTRONIQUE

(30) Priority: 04.10.2016 EP 16192163
(43) Date of publication of application: 14.08.2019
(73) Proprietor: Pirelli Tyre S.p.A., 20126 Milano (IT)
(72) Inventor: PUPPI, Cristiano, 20126 Milano (IT); ACCORRA', Matteo, 20126 Milano (IT); BERENGUER, Albert, 20126 Milano (IT); BOSCAINO, Ivan Gildo, 20126 Milano (IT); MANCINI, Gianni, 10141 TORINO (TO) (IT); MARCHINI, Maurizio, 20038 Seregno (MB) (IT); MONTEROSSO, Antonio, 20126 Milano (IT); VANIGLIA, Erika, 20131 MILANO (IT)
(74) Representative: Lasca, Sergio
(86) International application number: PCT/IB2017/055731
(87) International publication number: WO 2018/065846

(56) References cited:
- WO-A1-2016/017505
- US-A1- 2006 220 816
- US-A1- 2007 146 124

## Description

### Field of the invention

The present invention concerns a device for securing an electronic unit to a tyre. The present invention also concerns a tyre comprising an electronic unit included in a securing device.

### Background art

For some types of tyres, especially those that require a high level of performance, monitoring devices have been studied for some time which, when placed within said tyres, will have the task of detecting tyre's characteristic values, so as to allow substantially real-time control of the operation and conditions of the tyre.

These monitoring devices will periodically dialogue with the devices on board the vehicle, so that all the detected information can be provided to the driver and/or vehicle control systems, to, for example, activate or adjust to the best alarm systems and/or vehicle dynamics control, braking, etc.

The monitoring devices for tyres typically comprise an electronic unit and a securing device.

The electronic unit comprises at least one sensor (for example a temperature sensor, a pressure sensor, a sensor able to measure/identify the tyre's deformations during rolling, such as, for example, an accelerometer, a strain gauge, etc.) and a transmission system for sending the data detected by said at least one sensor to a receiving unit located on the vehicle.

The securing device has the task of keeping the electronic unit fixed to the tyre. In particular, in order to identify and measure the tyre's deformations and estimate from said deformations certain parameters (for example the length of the footprint area, the load acting on the tyre, the angular velocity, the friction between the tyre and the rolling surface, the wear of the tyre, etc.) it may be convenient to fix one or more monitoring devices to the inner surface of the tyre, for example on the tyre's inner surface opposite to the tread.

A basic problem of the securing devices relates to the fact that the tyre, especially at the entrance to and exit from the footprint area, is subjected to mechanical stresses that will cause significant deformations of the same. On the other hand, the housing in which the electronic unit is located is typically made of substantially rigid material in order to preserve its content and allow for the electronic unit's proper operation.

The fact that the electronic unit (rigid) must remain fixed to the tyre's inner surface (subjected to deformation) is a highly critical aspect for the securing device: the latter, while being fixed to the tyre's inner surface, and therefore being subject to the same stresses as the tyre, has the task of maintaining a reliable and lasting bond with a substantially non-deformable object, that is, the electronic unit's housing.

The patent applications WO2006/103706, WO2007/000781, WO2007/121768, WO2010/043264, WO2013/098711, WO2013/098712, WO2015/019283, WO2015/019288 in the name of the same Applicant describe some examples of securing devices. Other solutions are described in the documents WO99/41093, US7598877, US2009/0084480, US6782741, US 2007/146124, US 2006/220816, US2016/017505, wherein US2006/220816 discloses a securing device according to the preamble of claim 1.

### Summary of the invention

"Structural" adhesives, for example those with cyanoacrylate-based materials, are currently used to keep the monitoring devices firmly fixed to the inner surface of the tyres. Such adhesives, by polymerizing between the surfaces to be joined and possibly forming a matrix at the interface of the surfaces glued together, are able to withstand very large stresses, greater than the tensile strength of the material the same surfaces are made of. In other words, when a securing device is fixed to the inner surface of the tyre by means of a structural adhesive, and stress is applied which tends to separate the securing device from the inner surface of the tyre after this connection, the adhesive resists the stress up to the tearing of the glued-together surfaces, without having a tearing of the polymerized layer formed by the structural adhesive.

The formation of such a resilient interface layer is very advantageous for the purposes of fixing a monitoring device to the inner surface of a tyre, as such layer practically acts like a real weld, able to effectively withstand the stresses transmitted to the tyre due to the rolling.

The use of a structural adhesive, however, requires particular care in the coating of the surfaces to be fixed by means of the adhesive for the purpose of gluing the surfaces themselves, and for the correct formation of the welding layer. The latter also requires significant polymerization times, and/or certain activation conditions, such as for example particular conditions of temperature and humidity, surface acidity, the presence of certain chemical components, etc.

The Applicant has tackled the problem of providing a device for securing an electronic unit being able to be fixed to a tyre's inner surface (and in particular to the inner surface portion opposite to the tread) with a simplified and rapid procedure, while maintaining the effectiveness of the connection and its resistance to the stresses imposed by the tyre's rolling.

The Applicant has found that this problem can be solved by means of a securing device comprising a base formed by a layer of elastomeric material on which a module comprising or intended to house the electronic unit is glued by means of a structural adhesive. The lower surface of the elastomeric material base, opposite to the surface the module is glued to and which is intended for gluing to the tyre's surface, is instead coated by means of a pressure sensitive adhesive (PSA). This surface has also a greater area than the surface area of the module glued to the base.

In a first aspect, the present invention concerns a device for securing an electronic unit to a tyre with the features of claim 1.

In a second aspect, the present invention concerns a tyre with the features of claim 11.

In at least one of the above aspects, the present invention has one or more of the following preferred features.

The securing device comprises a base formed by a single layer of elastomeric material and a module comprising or intended to house said electronic unit. The base of the securing device comprises an upper surface and a lower surface.

A lower surface of the module is fixed to the upper surface of said base by means of a structural adhesive.

The lower surface of said base is coated with a pressure sensitive adhesive (PSA). The lower surface of said base has a greater area than an area of the lower surface of said module. Preferably, the area of the lower surface of the base is at least equal to about 130%, more preferably at least about 200%, even more preferably at least about 300% of the area of the lower surface of the module. Preferably, the percentage ratio between the area of the lower surface of the base and the area of the lower surface of the module does not exceed about 2000%.

The use of a pressure sensitive adhesive (PSA) allows the securing device to be fixed to the tyre's inner surface with an extremely simplified procedure. In fact, the PSA allows gluing to the tyre's inner surface by applying a pressure action to the base of the securing device which does not require particularly long times or a particularly careful application of the same pressure, or particular environmental conditions when gluing. At the same time, the increased surface relative to that of the module containing or suitable for containing the electronic unit allows a firm bond to be obtained which is effective against the stresses imposed by the tyre's rolling.

In preferred embodiments, the pressure sensitive adhesive (PSA) can be an acrylic adhesive, a silicone adhesive, a butyl adhesive, a natural rubber-based adhesive or a block copolymer based adhesive.

More particularly, the pressure sensitive adhesive (PSA) should be selected such that it is compatible with the compound of the tyre's inner surface (i.e., of the liner or the inner-liner). This feature does not seem to be particularly critical per se, since substantially all PSAs have a formulation based on elastomeric polymers. In addition, the PSA should be able to ensure strong adhesion at room temperature (i.e. about 25°C) and should not degrade at high temperatures (i.e. up to about 100-130°C), and/or ensure high resistance to shearing stresses, in particular cyclic shearing stresses. The Applicant has verified that acrylic adhesives in particular can be adapted to these purposes. The skilled technician can anyhow choose the most convenient PSA, taking the specifications described above into account.

In preferred embodiments, it may be convenient to prepare the portion of the tyre's inner surface intended for the gluing of the securing device in such a way that it results, as much as possible, to be cleaned out of substances that could jeopardize the device's adhesion, such as for example dust, dirt and/or any releasing agent residues used during the vulcanization of the tyre. This can be achieved, for example, by cleaning with detergents and/or solvents, and/or with mechanical action, and/or with polishing action through laser. In another embodiment, a protective film can be provided on the green tyre prior to vulcanization at the portion of the inner surface intended for the gluing of the securing device. The protective film maintains the portion of the tyre's inner surface substantially free from pollution by releasing agents (or in any case from dirty or undesired substances resulting from the vulcanization process), and is then removed after the vulcanization process, prior to the gluing of the securing device. Such film can be made of a material that is resistant to the operating temperature and pressure conditions which are typical of the vulcanization process, such as, for example, nylon or polyester.

As stated above, the adhesion between the base and the module housing or intended to house the electronic unit is ensured by means of a structural adhesive. This structural adhesive may be, for example, a cyanoacrylate-based adhesive, a polyurethane-based adhesive, an epoxy adhesive, an acrylic adhesive. The gluing of the module to the base can advantageously take place separately from the gluing of the entire securing device to the tyre's inner surface, without having particular limitations in terms of application times and/or positioning accuracy during gluing. The device comprising the elastomeric material base and the module housing or suitable to house the electronic unit can, for example, be produced in series by means of a dedicated line and then supplied as a kit to be applied to a tyre.

The base of the securing device is formed by a single layer of elastomeric material. This allows the securing device's bonding surface to be increased without significantly increasing the weight of the entire device to be applied to the tyre's inner surface. With regards to the elastomeric material, it is not particularly critical for the purposes of the present invention, and can be prepared with materials usually used in compounds for tyres. Typically, the elastomeric material comprises a rubber (for example diene or butyl rubber) reinforced with carbon black.

In particularly preferred embodiments, the elastomeric material comprises a plurality of elongated reinforcing elements. Preferably, such elongated reinforcing elements can comprise filaments or textile cords made of one or more of the following textile materials: aramid, rayon, polyester, nylon, lyocell. The expression "one or more (...) textile materials" includes the case in which only one material is used for all the textile cords or filaments used in the base, or the case in which multiple materials are used for mixed filaments or cords (for example filaments or cords of one material alternated with filaments or cords of another material) in the base, or the case in which multiple materials are used in hybrid filaments or cords (i.e. cords comprising filaments of two different materials) in the base.

The elongated reinforcing elements can also be made by means of or comprise metal (possibly hybrid metal/textile) filaments or cords, for example made of steel. The elongated reinforcing elements may be preferably arranged in the elastomeric material base with a density comprised between 30 cords/dm and 500 cords/dm.

Preferably, the base of the securing device has a perimeter free from edges and/or portions with small curved radii. Preferably, the base has a circular or oval shape. This allows for a reduction in the occurrence of cracks triggered in the base due to the concentration of stresses in edges or perimeter portions with low curve radii. The onset of trigger points of localized detachments is also reduced. In general, it may be preferable to provide the base of the securing device with an elongated shape (e.g. oval, substantially rectangular with rounded edges, etc.).

The module glued by means of its lower surface to the base may comprise a rigid body suitable for the housing of said electronic unit. This allows the electronic unit to be housed in a stable manner on the module. For example, the module can be made of plastic material, and/or with resins (for example epoxy or polyurethane resins), and/or in sufficiently rigid elastomeric material, provided that such materials are compatible with the structural adhesive used for gluing the module to the base.

In preferred embodiments, the module can have a cylindrical or prismatic shape. In some embodiments, the module may also include a body or a protective shell of elastomeric material suitable for housing the electronic unit. This protective shell can completely enclose the electronic unit (preferably covered by rigid material) to further protect the electronic unit itself from shocks or stresses transmitted by the tyre's inner surface during rolling.

As mentioned above, a tyre according to the invention comprises an inner surface and an electronic unit. The electronic unit is included in the securing device described above, fixed to the tyre's inner surface by means of the lower surface of the base of the securing device and by means of said pressure sensitive adhesive.

In preferred embodiments, the securing device is fixed to a portion of the tyre's inner surface that is opposite to the tread.

In preferred embodiments, the securing device is fixed to the tyre's inner surface such that the elongated reinforcing elements are arranged substantially according to a circumferential direction of said tyre (i.e. within an angle of approximately ±25° with respect to the circumferential direction). This allows the stresses, and in particular the shearing stress the electronic unit is subjected to each time it passes the footprint area's entrance/exit, to be contrasted. In fact, the presence of the elongated reinforcement elements in the base allows for the securing of the module containing the electronic unit to the same base to be increased, by means of a contrasting action to the stresses which operates in synergy with the constraint already imposed by the presence of the gluing layer formed by the structural adhesive.

If the base of the securing device has an elongated shape (for example oval or substantially rectangular), it may be convenient to fix the securing device to the tyre's inner surface such that a greater size of the elongated shape base is arranged substantially according to a circumferential direction of said tyre (i.e. within an angle of approximately ± 25° with respect to the circumferential direction).

It may also be convenient to prepare the module containing or suitable to the housing of the electronic unit such that it has a lower surface with an elongated shape, for example elliptical or substantially rectangular. In this case it may be convenient to fix the securing device to the tyre's inner surface such that the greater size of the lower surface of the module is arranged substantially according to an axial direction of said tyre (i.e. within an angle of approximately ± 25° with respect to the axial direction). This advantageously allows for the increase of the surface of the module to be glued to the securing device's base without increasing the circumferential extension of the glued surface, so as to reduce the risk of detachment of the module from the base due to the intrinsic stiffness of the glued surface when the electronic unit passes the footprint area's entrance and exit.

It is noticed that the terms "lower" and "upper" used in this description and in the claims should not be interpreted in a limiting way, and are used for merely descriptive purposes with their usual meaning to distinguish the different surfaces of the objects to which they refer.

For the purposes of the present invention, the "circumferential direction" of the tyre is intended as a direction oriented according to the rolling direction of the same tyre.

For the purposes of the present invention, the "axial direction" of the tyre is intended as a direction parallel to the axis of rotation of the tyre.

### Brief description of the figures

Further characteristics and advantages of the present invention will become apparent from the following detailed descriptions of some embodiments thereof, which are given only by way of non-limiting examples. The description will refer to the accompanying figures, wherein:
- figure 1 schematically shows an electronic unit comprising at least one sensor for tyre monitoring;
- figure 2 shows a tyre monitoring device comprising a securing device according to a first embodiment of the invention;
- figure 3 is a plan view of the monitoring device of figure 2;
- figure 4 schematically shows a section of the monitoring device of figures 2-3 along section A-A;
- figure 5 schematically shows a section of monitoring device of figures 2-3 along section B-B;
- figure 6 shows a tyre monitoring device comprising a securing device according to a second embodiment of the invention;
- figure 7 shows a tyre with the monitoring device of figure 6 glued to its inner surface.

### Detailed description of some examples of the invention

With reference to the enclosed figures, reference number 1 comprehensively indicates a monitoring device for tyres of vehicle wheels.

The monitoring device 1 firstly comprises an electronic unit 10, suitable for detecting at least one characteristic variable of a tyre and for transmitting at least one corresponding parameter representative of said detected variable. For this purpose, electronic unit 10 may be provided with at least one sensor 11 suitable for the detection of said at least one characteristic variable, operatively associated to a processing/transmission system 12 of said at least one parameter.

The at least one sensor 11 can be, for example, a temperature sensor, and/or a pressure sensor, and/or a sensor capable of measuring the deformations undergone by the tyre during rolling, such as for example a strain gauge, or an accelerometer, an optical sensor able to detect displacements, a magneto-resistive sensor, an inertial sensor, a gyroscope, etc.

The processing/transmission system 12, operatively connected to said at least one sensor 11, provides for acquiring and processing the data detected by the latter. After processing, the processing/transmission system 12 provides for the transmission of the parameter or of the parameters characteristic of the variable to be monitored outside of the tyre.

The processing/transmission system 12 preferably comprises a microprocessor, an antenna and other circuitry necessary to carry out processing and/or analysis of the signals coming from the at least one sensor 11, so as to make the same suitable for the transmission of data from the monitoring device 1 to a receiver located on board a vehicle.

In one embodiment the data made available by sensor 11 can be processed directly by the system 12, advantageously provided with a suitable microprocessor or integrated circuit (for example of the ASIC - Application Specific Integrated Circuit type).

The processing/transmission system 12 thus enables communication with the instrumentation on board the vehicle, for example in a periodic manner, so that all the relevant information can be provided to the driver and/or to a vehicle control system, and/or so as to activate or adjust to the best alarm systems and/or vehicle dynamics control systems, braking, etc.

This communication can be either unidirectional (from electronic unit 10 to the instrumentation on board the vehicle), or bidirectional.

The monitoring device 1 further comprises a securing device 20, having the aim of maintaining the electronic unit 10 fastened to a portion of the tyre.

In the embodiments shown in the figures, the securing device 20 comprises a base 30 and a module 40 where the electronic unit 10 is housed. In the embodiments shown in the figures, the electronic unit is arranged above module 40 (for example by gluing, and/or interlocking, and/or screwing on a suitable thread). The electronic unit's housing 10 in module 40 is not however critical for the present invention and may be prepared as best convenient for the skilled technician, according to the required specifications. For example, module 40 may completely enclose electronic unit 10, so as to make it inaccessible or irreplaceable.

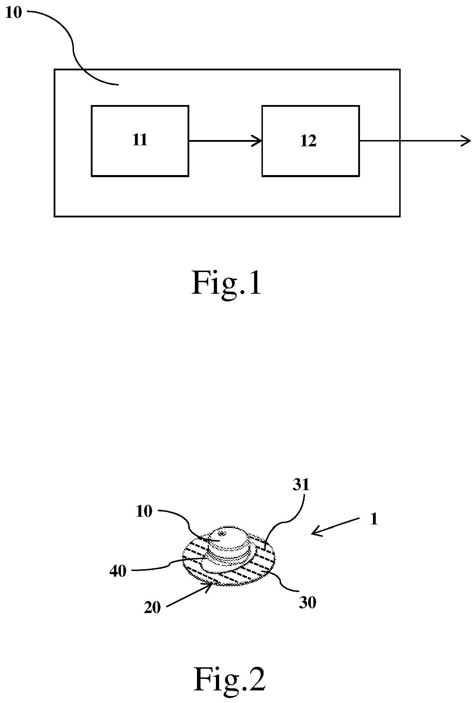

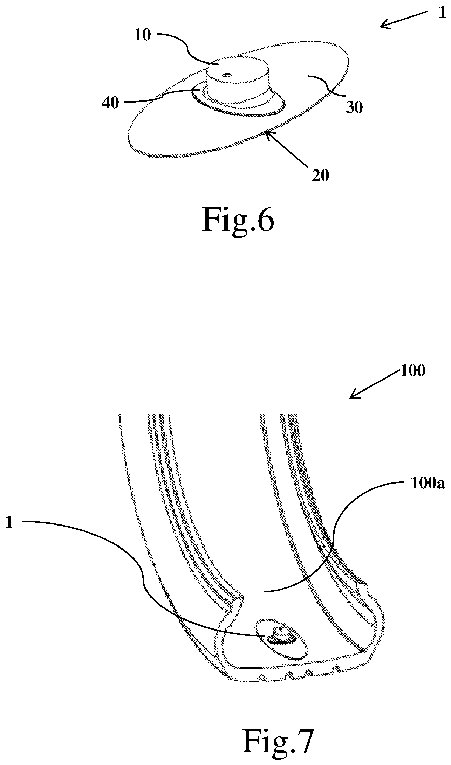

The base 30 of the securing device 20 is formed by a single layer of elastomeric material. Preferably, the base 30 has a perimeter free of sharp edges and/or portions with small curve radii. In the embodiment shown in the figures, the base 30 has a circular (figures 2-5) or oval shape (figures 6-7). In general, it may be preferable to prepare the base 30 with an elongated shape, for example oval or substantially rectangular with rounded edges, etc.

In the preferred embodiments schematically shown in figures 2-5, the layer of elastomeric material forming the base 30 comprises a plurality of elongated reinforcing elements 31, for example textile filaments or cords, made of aramid, and/or rayon, and/or polyester, and/or nylon, and/or lyocell. Alternatively, the elongated reinforcing elements 31 can also be made by means of or comprise metal filaments or cords, such as made of steel. The elongated reinforcing elements 31 are embedded within the layer of elastomeric material, and arranged substantially parallel to each other. Naturally, the embodiment shown in figures 6-7 can also comprise a base 30 embedding elongated reinforcing elements as described above.

For the purposes of gluing the securing device 20 and/or the monitoring device 1 to the inner surface of the tyre, the lower surface 32 of the base 30 is coated with a pressure sensitive adhesive (PSA). In preferred embodiments, the PSA can be an acrylic adhesive, a silicone adhesive, a butyl adhesive, a natural rubber-based adhesive, a block copolymer based adhesive. Preferably, the PSA is disposed as a layer on the entire lower surface 32 of the base 30. For the purposes of protecting the PSA, a removable film can be disposed, such as a polyethylene or polypropylene or paper film, coated with a non-stick layer. When it is time to glue the securing device 20 and/or the monitoring device 1 to the inner surface of the tyre, this protective film can be removed so that the PSA layer is faced to inner surface of the tyre at the chosen portion for the gluing. Gluing is then carried out simply by applying pressure to the securing device 20 against the inner surface of the tyre so as to activate the PSA and form the adhesive layer.

The lower surface 41 of module 40 is glued to the upper surface 33 of the base 30 by means of a structural adhesive. This structural adhesive can be for example a cyanoacrylate-based adhesive, a polyurethane adhesive, an epoxy or acrylic adhesive. The gluing of the module 40 to the base 30 can advantageously take place prior to gluing the entire securing device 20 and/or the monitoring device 1 to the inner surface of the tyre. In doing so, the correct formation of the polymerized adhesive interface layer between the lower surface 41 of the module 40 and the upper surface 33 of the base 30 can take place using the correct environmental conditions, the correct positioning of the module 40 and of the base 30 and the time necessary according to the chosen type of adhesive, so as to create a strong bond between the base 30 and the module 40. With the gluing of the module 40 on the base 30 (and possibly with the housing of the electronic unit 10 in module 40), the securing device 20 and/or the monitoring device 1 are advantageously formed as objects per se (for example in kit), ready to be glued, by means of the PSA arranged on the lower surface 33 of the base 30 of the securing device 20, to the tyre's inner surface.

For the purpose of having a stable housing of the electronic unit 10, the module 40 may comprise a rigid body. For example, the module 40 can be made of plastic material, and/or with resins (e.g. epoxy or polyurethane resins), and/or in sufficiently rigid elastomeric material, provided that such materials are compatible with the structural adhesive used for gluing the module 40 to the base 30.

In the embodiments shown in the figures, the module 40 has a substantially cylindrical shape.

In some embodiments (not shown in the figures), the module 40 can also comprise a body or a protective shell in elastomeric material suitable for the housing of the electronic unit (for example a body or a protective shell as described in patent applications WO2006/103706, WO2007/000781, WO2007/121768, WO2010/043264, WO2013/098711, WO2013/098712, WO2015/019283, WO2015/019288 in the name of the same Applicant).

For example, a protective shell of non-rigid elastomeric material can completely enclose the electronic unit 10 to further the protect electronic unit 10 itself from shocks or stresses transmitted from the tyre's inner surface during rolling. Such protective shell can then be glued, by means of the structural adhesive, to the upper surface 33 of the base 30.

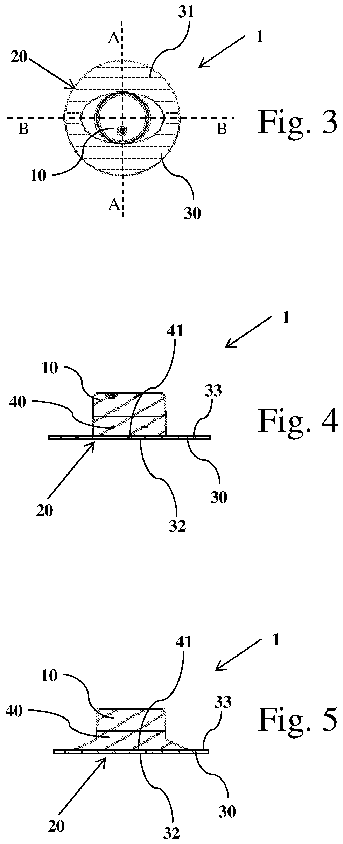

In the embodiments shown in the figures, the lower surface 41 of the module 40 has an elliptical shape. This can increase the bonding surface of the module 40 to the base 30 without significantly increasing the weight of module 40, but is not considered necessary for the purposes of the invention. Moreover, other elongated forms can be advantageously used, such as a substantially rectangular shape. As it can be seen from the sections shown in figures 4-5, the elongated shape of the lower surface 41 of module 40 can be obtained by means of a widened, tapering portion which extends in only one direction. Preferably, the module 40 is glued to the base 30 in such a way that the greatest dimension of the lower surface 41 is arranged substantially perpendicular to the extension direction of the elongated reinforcing elements 31. In other embodiments (not shown), a widening of the lower surface 41 with respect to the rest of the body of module 40 can be carried out in multiple directions, or even in each direction.

As shown in the figures, the lower surface 32 of the base 30 has an area greater than the area of the lower surface 41 of the module 40. Preferably, the area of the lower surface 32 of the base 30 is at least equal to 130%, preferably at least equal to 200%, even more preferably at least equal to 300% of the area of the lower surface 41 of the module 40. The lower surface 32 of the base 30 is that intended for adhesion to the tyre's inner surface, and its increased area allows a stable bond to be obtained of the securing device 20 and/or of the monitoring device 1 to the tyre's inner surface.

Figure 7 shows the monitoring device 1 fixed to the radially inner surface 100a of a tyre 100. It is noticed that the sizes of the monitoring device 1 have been deliberately increased compared to the sizes of tyre 100 in order to make the figure easier to read.

The monitoring device 1 is glued to inner surface 100a of tyre 100 through the securing device described above in reference to figure 6, and in particular by means of gluing the lower surface of the base of the securing device to inner surface 100a of tyre 100. The gluing is carried out by means of the pressure sensitive adhesive layer arranged on the lower surface of the base of the securing device.

In the embodiment shown in the figure, the monitoring device 1 is fixed to a portion of the inner surface 100a opposite to the tread of the tyre 100. More particularly, the monitoring device 1 is fixed to a portion of the inner surface at or across the tyre's equatorial plane.

The base of the securing device, having elongated shape in the embodiment shown in the figure, is fixed to the inner surface 100a of tyre 100 such that its greater size is arranged substantially according to a circumferential direction of the tyre 100.

Furthermore, in this preferred embodiment, the monitoring device 1 is fixed to the inner surface 100a of tyre 100 such that the elongated reinforcing elements embedded in the base of the securing device are arranged substantially according to a circumferential direction of the tyre 100.

The monitoring device 1 is further fixed to the inner surface 100a of tyre 100 such that the lower surface of the module housing the electronic unit, having elongated shape in the embodiment shown in the figure, is arranged in such a manner that its greater size extends substantially according to an axial direction of the tyre 100.

In preferred embodiments, before gluing the securing device and/or the monitoring device 1, the portion of inner surface 100a of tyre 100 intended for the gluing is cleaned from substances that may jeopardize the device's adhesion, such as dust, dirt and/or residues of releasing agents used during the tyre's vulcanization. This can be achieved, for example, by cleaning with detergents and/or solvents, and/or with mechanical action, and/or with polishing action through laser.

In another embodiment, a protective film, for example a nylon or polyester film, can be arranged on the green tyre prior to vulcanization, at the portion of inner surface of the tyre intended for the gluing of the securing device and/or of the monitoring device. The protective film maintains the portion of the tyre's inner surface substantially free from pollution by releasing agents (or in any case from dirty or undesired substances) used in the vulcanization process, remaining adhered to the finished tyre at the end of vulcanization. Before gluing the securing device and/or the monitoring device 1, the film is removed so as to expose a clean portion of inner surface 100a of tyre 100 for the gluing of the securing device and/or of the monitoring device 1.

In use, during rolling of tyre 100, the electronic unit contained in the monitoring device 1 provides for detecting and transmitting the envisaged data. Monitoring device 1 is subjected to very significant stresses, in particular in the circumferential direction, when it passes in the footprint's entrance/exit area. The stresses caused by the rolling of the tyre 100 are transmitted to the inner surface 100a and then to the monitoring device 1. The presence of the base with an increased surface area allows for a strong bond of the monitoring device 1 despite the fact that adhesion is carried out by means of a pressure sensitive adhesive. The adhesion layer placed at the interface between the base and the module housing the electronic unit, carried out by means of the structural adhesive, and, where present, the elongated reinforcing elements embedded in the base, allows these stresses to be counteracted so as to form a whole set that is substantially non-deformable in the circumferential direction. In this way, the formation of cracks and/or detachment portions in the securing device is effectively counteracted, so as to maintain a strong fastening of the monitoring device 1 to the inner surface 100a of tyre 100.

Herein below are two complete examples of securing device according to the invention, which the Applicant has verified to be resistant during rolling at high speeds in indoor tests, up to speeds higher than 300 km/h:
1) Base: single layer of reinforced elastomeric material, circular
   Diameter: 55mm
   Base lower surface area: 23.8 cm²
   Base thickness: 0.5 mm
   Elongated reinforcing elements: aramid cords, linear density 840/2 dTex, cord density 110 cords/dm
   Pressure sensitive adhesive: acrylic 3M 9472FL
   Body of the electronic unit housing module: rigid nylon cylinder
   External cylinder diameter: 24 mm
   Shape of the housing module's lower surface: oval
   Greater size: 40 mm
   Smaller size: 24 mm
   Lower surface area of the housing module: 7.7 cm²
   Structural adhesive: cyanoacrylate Cyberbond Apollo 2014
   Ratio % base lower surface area/ module lower surface area: 23.8/7.7% = 309%
2) Base: single layer of reinforced elastomeric material, oval
   Greater size: 95mm
   Smaller size: 55mm
   Base lower surface area: 41 cm²
   Base thickness: 0.5 mm
   Elongated reinforcing elements: aramid cords, linear density 840/2 dTex, cord density 110 cords/dm
   Pressure sensitive adhesive: acrylic 3M 9472FL
   Body of the electronic unit housing module: rigid nylon cylinder
   External cylinder diameter: 24 mm
   Shape of the housing module's lower surface: oval
   Greater size: 40 mm
   Smaller size: 24 mm
   Housing module lower surface area: 7.7 cm²
   Structural adhesive: cyanoacrylate Cyberbond Apollo 2014
   Ratio % base lower surface area/ module lower surface area: 41/7.7% = 532%

## Claims

1. Device (20) for securing an electronic unit (10) to a tyre (100), comprising a base (30) formed by a single layer of elastomeric material and a module (40) comprising or intended to house said electronic unit (10), wherein:
- said base (30) comprises an upper surface (33) and a lower surface (32);
- said lower surface (32) of said base (30) has a greater area than an area of a lower surface (41) of said module (40); and being **characterised in that**
- said lower surface (41) of said module (40) is glued to said upper surface (33) of said base (30) by means of a structural adhesive;
- said lower surface (32) of said base (30) is coated with a pressure-sensitive adhesive.

2. Device according to claim 1, wherein said elastomeric material comprises a plurality of reinforcing elements (31).

3. Device according to claim 2, wherein said reinforcing elements (31) comprise filaments or textile or metallic cords.

4. Device according to claim 3, wherein said filaments or textile cords are made of one or more of the following textile materials: aramid, rayon, polyester, nylon, lyocell.

5. Device according to any one of claims 2 to 4, wherein said reinforcing elements (31) are arranged in said base (30) with a density between 30 cords/dm and 500 cords/dm.

6. Device according to any one of the preceding claims, wherein said base (30) has a circular or oval shape.

7. Device according to any one of the preceding claims, wherein said area of the lower surface (32) of said base (30) is at least equal to 130% of said area of the lower surface (41) of said module (40) and/or does not exceed 2000% of said area of the lower surface (41) of said module (40).

8. Device according to claim 7, wherein said area of the lower surface (32) of said base (30) is at least equal to 200% of said area of the lower surface (41) of said module (40).

9. Device according to any one of the preceding claims, wherein said module (40) comprises a rigid body suitable for housing said electronic unit (10) or an elastomeric material body suitable for housing said electronic unit (10).

10. Device according to any one of the preceding claims, wherein said structural adhesive is a cyanoacrylate-based adhesive, or a polyurethane-based adhesive, or an epoxy adhesive, or an acrylic adhesive.

11. Tyre (100) comprising an inner surface (100a) and an electronic unit (10), wherein said electronic unit (10) is included in a securing device (20) according to any one of the preceding claims, fixed to said inner surface (100a) of the tyre (100) by means of said lower surface (32) of said base (30) and of said pressure sensitive adhesive.

12. Tyre according to claim 11, wherein said electronic unit (10) is included in a securing device (20) according to any one of claims 2 to 5, fixed to said inner surface (100a) such that said reinforcing elements (31) are arranged substantially according to a circumferential direction of said tyre (100).

13. Tyre according to claims 11 or 12, wherein said base (30) has an elongated shape, and said securing device (20) is fixed to said inner surface (100a) such that a greater dimension of said base (30) is disposed substantially according to a circumferential direction of said tyre (100).

14. Tyre according to any one of claims 11 to 13, wherein said lower surface (41) of said module (40) has an elongated shape, and said securing device (20) is fixed to said inner surface (100a) such that a greater dimension of said lower surface (41) of said module (40) is arranged substantially according to an axial direction of said tyre (100).

15. Tyre according to any one of claims 11 to 14, wherein said securing device (20) is fixed to a portion of said inner surface (100a) opposite to a tread of said tyre (100).

## Patentansprüche

1. Vorrichtung (20) zur Befestigung einer elektronischen Einheit (10) an einem Reifen (100), umfassend eine Basis (30), die aus einer einzigen Lage aus Elastomermaterial gebildet ist, und ein Modul (40), das die elektronische Einheit (10) umfasst oder dazu bestimmt ist, diese aufzunehmen, wobei
- die Basis (30) eine obere Oberfläche (33) und eine untere Oberfläche (32) umfasst;
- die untere Oberfläche (32) der Basis (30) einen größeren Flächeninhalt als eine untere Oberfläche (41) des Moduls (40) aufweist; und **dadurch gekennzeichnet, dass**
- die untere Oberfläche (41) des Moduls (40) mittels eines Strukturklebstoffs an die obere Oberfläche (33) der Basis (30) geklebt ist;
- die untere Oberfläche (32) der Basis (30) mit einem Haftklebstoff beschichtet ist.

2. Vorrichtung nach Anspruch 1, wobei das Elastomermaterial eine Vielzahl von Verstärkungselementen (31) umfasst.

3. Vorrichtung nach Anspruch 2, wobei die Verstärkungselemente (31) Filamente oder textile oder metallische Korde umfassen.

4. Vorrichtung nach Anspruch 3, wobei die Filamente oder textilen Korde aus einem oder mehreren der folgenden textilen Materialien bestehen: Aramid, Rayon, Polyester, Nylon, Lyocell.

5. Vorrichtung nach einem der Ansprüche 2 bis 4, wobei die Verstärkungselemente (31) in der Basis (30) mit einer Dichte zwischen 30 Korden/dm und 500 Korden/dm angeordnet sind.

6. Vorrichtung nach einem der vorhergehenden Ansprüche, wobei die Basis (30) eine kreisförmige oder ovale Form aufweist.

7. Vorrichtung nach einem der vorhergehenden Ansprüche, wobei der Flächeninhalt der unteren Oberfläche (32) der Basis (30) mindestens gleich 130 % des Flächeninhalts der unteren Oberfläche (41) des Moduls (40) beträgt und/oder 2000 % des Flächeninhalts der unteren Oberfläche (41) des Moduls (40) nicht überschreitet.

8. Vorrichtung nach Anspruch 7, wobei die Fläche der unteren Oberfläche (32) der Basis (30) mindestens 200 % des Flächeninhalts der unteren Oberfläche (41) des Moduls (40) beträgt.

9. Vorrichtung nach einem der vorhergehenden Ansprüche, wobei das Modul (40) einen starren Körper, der zur Aufnahme der elektronischen Einheit (10) geeignet ist, oder einen Körper aus Elastomermaterial, der zur Aufnahme der elektronischen Einheit (10) geeignet ist, umfasst.

10. Vorrichtung nach einem der vorhergehenden Ansprüche, wobei der Strukturklebstoff ein Klebstoff auf Cyanacrylatbasis oder ein Klebstoff auf Polyurethanbasis oder ein Epoxidklebstoff oder ein Acrylklebstoff ist.

11. Reifen (100), umfassend eine Innenfläche (100a) und eine elektronische Einheit (10), wobei die elektronische Einheit (10) in einer Befestigungsvorrichtung (20) nach einem der vorhergehenden Ansprüche eingeschlossen ist, die an der Innenfläche (100a) des Reifens (100) mittels der unteren Oberfläche (32) der Basis (30) und des Haftklebstoffs befestigt ist.

12. Reifen nach Anspruch 11, wobei die elektronische Einheit (10) in einer Befestigungsvorrichtung (20) nach einem der Ansprüche 2 bis 5 eingeschlossen ist, die an der Innenfläche (100a) so befestigt ist, dass die Verstärkungselemente (31) im Wesentlichen entsprechend einer Umfangsrichtung des Reifens (100) angeordnet sind.

13. Reifen nach Anspruch 11 oder 12, wobei die Basis (30) eine längliche Form aufweist und die Befestigungsvorrichtung (20) an der Innenfläche (100a) so befestigt ist, dass eine größere Abmessung der Basis (30) im Wesentlichen entsprechend einer Umfangsrichtung des Reifens (100) angeordnet ist.

14. Reifen nach einem der Ansprüche 11 bis 13, wobei die untere Oberfläche (41) des Moduls (40) eine längliche Form aufweist und die Befestigungsvorrichtung (20) an der Innenfläche (100a) so befestigt ist, dass eine größere Abmessung der unteren Oberfläche (41) des Moduls (40) im Wesentlichen entsprechend einer Achsenrichtung des Reifens (100) angeordnet ist.

15. Reifen nach einem der Ansprüche 11 bis 14, wobei die Befestigungsvorrichtung (20) an einem Abschnitt der Innenfläche (100a) gegenüber einer Lauffläche des Reifens (100) befestigt ist.

## Revendications

1. Dispositif (20) de fixation d'une unité électronique (10) sur un pneu (100), comprenant une base (30) formée par une seule couche de matériau élastomère et un module (40) comprenant ou destiné à recevoir ladite unité électronique (10), dans lequel :
- ladite base (30) comprend une surface supérieure (33) et une surface inférieure (32) ;
- ladite surface inférieure (32) de ladite base (30) a une aire plus grande qu'une aire d'une surface inférieure (41) dudit module (40) ; et étant **caractérisé en ce que**
- ladite surface inférieure (41) dudit module (40) est collée à ladite surface supérieure (33) de ladite base (30) au moyen d'un adhésif structurel ;
- ladite surface inférieure (32) de ladite base (30) est revêtue d'un adhésif sensible à la pression.

2. Dispositif selon la revendication 1, dans lequel ledit matériau élastomère comprend une pluralité d'éléments de renforcement (31).

3. Dispositif selon la revendication 2, dans lequel lesdits éléments de renforcement (31) comprennent des filaments ou des câblés textiles ou métalliques.

4. Dispositif selon la revendication 3, dans lequel lesdits filaments ou câblés textiles sont constitués d'un ou de plusieurs des matériaux textiles suivants : aramide, rayonne, polyester, nylon, lyocell.

5. Dispositif selon l'une quelconque des revendications 2 à 4, dans lequel lesdits éléments de renforcement (31) sont agencés dans ladite base (30) avec une densité comprise entre 30 câblés/dm et 500 câblés/dm.

6. Dispositif selon l'une quelconque des revendications précédentes, dans lequel ladite base (30) a une forme circulaire ou ovale.

7. Dispositif selon l'une quelconque des revendications précédentes, dans lequel ladite aire de la surface inférieure (32) de ladite base (30) est au moins égale à 130% de ladite aire de la surface inférieure (41) dudit module (40) et/ou ne dépasse pas 2000% de ladite aire de la surface inférieure (41) dudit module (40).

8. Dispositif selon la revendication 7, dans lequel ladite aire de la surface inférieure (32) de ladite base (30) est au moins égale à 200% de ladite aire de la surface inférieure (41) dudit module (40).

9. Dispositif selon l'une quelconque des revendications précédentes, dans lequel ledit module (40) comprend un corps rigide approprié pour recevoir ladite unité électronique (10) ou un corps en matériau élastomère approprié pour recevoir ladite unité électronique (10).

10. Dispositif selon l'une quelconque des revendications précédentes, dans lequel ledit adhésif structurel est un adhésif à base de cyanoacrylate, ou un adhésif à base de polyuréthane, ou un adhésif époxy, ou un adhésif acrylique.

11. Pneu (100) comprenant une surface interne (100a) et une unité électronique (10), dans lequel ladite unité électronique (10) est incluse dans un dispositif de fixation (20) selon l'une quelconque des revendications précédentes, fixé à ladite surface interne (100a) du pneu (100) au moyen de ladite surface inférieure (32) de ladite base (30) et dudit adhésif sensible à la pression.

12. Pneu selon la revendication 11, dans lequel ladite unité électronique (10) est incluse dans un dispositif de fixation (20) selon l'une quelconque des revendications 2 à 5, fixé à ladite surface interne (100a) de sorte que lesdits éléments de renforcement (31) soient agencés sensiblement selon une direction circonférentielle dudit pneu (100).

13. Pneu selon la revendication 11 ou 12, dans lequel ladite base (30) a une forme allongée, et ledit dispositif de fixation (20) est fixé à ladite surface interne (100a) de sorte qu'une plus grande dimension de ladite base (30) soit disposée sensiblement selon une direction circonférentielle dudit pneu (100).

14. Pneu selon l'une quelconque des revendications 11 à 13, dans lequel ladite surface inférieure (41) dudit module (40) a une forme allongée, et ledit dispositif de fixation (20) est fixé à ladite surface interne (100a) de sorte qu'une plus grande dimension de ladite surface inférieure (41) dudit module (40) soit agencée sensiblement selon une direction axiale dudit pneu (100).

15. Pneu selon l'une quelconque des revendications 11 à 14, dans lequel ledit dispositif de fixation (20) est fixé à une partie de ladite surface interne (100a) opposée à une bande de roulement dudit pneu (100).
